# EUROPÄISCHE PATENTANMELDUNG

(11) **EP 2 267 220 A1**
(43) Veröffentlichungstag der Anmeldung: **29.12.2010**
(21) Anmeldenummer: 10166745.9
(22) Anmeldetag: 22.06.2010
(51) Int. Cl.: D21F 3/08, B29C 53/78

(54) **Verfahren zur Herstellung einer Walze und Walze, insbesondere Papiermaschinenwalze**

(30) Priorität: 26.06.2009 DE 102009027229
(71) Anmelder: Voith Patent GmbH, 89522 Heidenheim (DE)
(72) Erfinder: Link, Christoph, 88250, Weingarten (DE)

(57) **Zusammenfassung**

Die Erfindung betrifft ein Verfahren zur Herstellung einer Walze (1), insbesondere Papiermaschinenwalze mit gerillter Oberfläche durch Aufbringen eines gerillten Bezuges (3) auf einen Walzenkern (5), bei welchem die zumindest einzelne Rille (2) von einander benachbart auf Stoß angeordneten Windungen (7.1-7.n) zumindest eines, Windungen (7.1-7.n) bildenden Elementes gebildet werden. Die Erfindung ist **dadurch gekennzeichnet, dass** die einzelnen Windungen (7.1-7.n) um den Außenumfang (4) des Walzenkerns (5) angeordnet werden und zumindest zwischen den einzelnen Windungen (7.1-7.n) und dem Walzenkern (5) eine stoffschlüssige Verbindung (9) erzeugt wird. Die Erfindung betrifft ferner eine Walze (1).

## Beschreibung

Die Erfindung betrifft ein Verfahren zur Herstellung einer Walze, insbesondere einer Papiermaschinenwalze, mit gerillter Oberfläche durch Aufbringen eines gerillten Bezuges auf einen Walzenkern, bei welchem die zumindest einzelne Rille von einander benachbart auf Stoß angeordneten Windungen zumindest eines Windungen bildenden Elementes gebildet werden.

Die Erfindung betrifft ferner eine Walze, insbesondere eine Papiermaschinenwalze, umfassend einen Walzenkern, ein um die Oberfläche des Walzenkerns aus zumindest einem, zumindest eine Windung bildenden Element unter Ausbildung einer in Umfangsrichtung verlaufenden Rille gebildeten Bezug.

Walzen, insbesondere Papiermaschinenwalzen mit einem gerillten Bezug, welcher durch Aufwickeln eines profilierten Bandes, insbesondere aus Edelstahl, um einen Walzenkern gebildet wird, sind in einer Vielzahl von Ausführungen aus dem Stand der Technik bekannt. Ein Verfahren zur Herstellung derartiger Walzen ist beispielsweise in der Druckschrift DE 2 545 146 U1 beschrieben. Die Profilierung des Bandes bestimmt dabei beim Aufwickeln um den Außenumfang des Walzenkerns die Rillenform und die Rillentiefe, wobei zur Gewährleistung der Funktionsweise einer derartigen Walze zur Erzeugung eines Mindestspeichervolumens für den Bezug eine bestimmte Mindeststärke und Mindestrillentiefe erforderlich sind. Dabei werden insbesondere bei Ausführungen der Bezüge aus Profilbändern diese unter hohem Druck und großen Anpresskräften auf den Walzenkern aufgewickelt. Die Haftung des Bezuges am Walzenkern erfolgt ausschließlich aufgrund der Vorspannungen zwischen diesen, insbesondere der erzeugten Pressverbindungen. Die Fixierung des Bezuges in axialer Richtung bezogen auf die Längsachse der Walze erfolgt mittels entsprechender Befestigungsringe am Walzenkern. Der Vorteil derartig gebildeter Bezüge besteht im Wesentlichen in einer sehr hohen Temperaturbeständigkeit sowie einer hohen Abriebfestigkeit. Wegen der nicht vorhandenen Eigenerwärmung des Bezuges kann auf eine Walzenkühlung verzichtet werden. Allerdings führen die zur Erzeugung der kraftschlüssigen Verbindung zwischen den einzelnen Windungen und dem Walzenkern erforderlichen hohen Vorspannungen häufig zur Deformation des Walzenkerns, der in der Regel als hohlzylindrisches Element ausgeführt ist. Dies bedingt, dass zur Gewährleistung der Funktion im Anschluss an das Aufbringen des Bezuges eine entsprechende Nachbearbeitung des Walzenkerns erforderlich ist, insbesondere wenn es sich um innengestützte Walzen handelt. Werden Walzenkerne aus metallischen Werkstoffen eingesetzt, ist das Dämpfungsverhalten sehr schlecht und die Gesamtmasse der so ausgebildeten Walzen relativ hoch.

Der Erfindung liegt daher die Aufgabe zugrunde, eine Walze, insbesondere eine Papiermaschinenwalze, der eingangs genannten Art mit einem gerillten Bezug derart herzustellen, dass die genannten Nachteile vermieden werden und eine aufwendige Nachbearbeitung nach Aufbringen des Bezuges vermieden wird.

Die erfindungsgemäße Lösung ist durch die Merkmale der Ansprüche 1 und 15 charakterisiert. Vorteilhafte Ausgestaltungen sind jeweils in den Unteransprüchen beschrieben.

Ein erfindungsgemäßes Verfahren zur Herstellung einer Walze, insbesondere Papiermaschinenwalze mit gerillter Oberfläche durch Aufbringen eines gerillten Bezuges auf einen Walzenkern, bei welchem die zumindest einzelne Rille von einander benachbart auf Stoß angeordneten Windungen zumindest eines Windungen bildenden Elementes gebildet werden, ist erfindungsgemäß dadurch charakterisiert, dass die einzelnen Windungen um den Außenumfang des Walzenkerns angeordnet werden und zwischen den einzelnen Windungen und dem Walzenkern eine stoffschlüssige Verbindung erzeugt wird.

Die erfindungsgemäße Lösung bietet den Vorteil, dass die Deformationen des Walzenkerns aufgrund der hohen erforderlichen Zugspannungen bei einer rein kraftschlüssigen Verbindung zwischen dem Bezug, insbesondere den Windungen und der Oberfläche des Walzenkerns vermieden werden. Dadurch wird eine ansonsten nach erfolgtem Aufbringen des Walzenbezugs am Außenumfang der Walze erforderliche Nachbearbeitung vermieden, insbesondere im Hinblick auf die vom Walzenkern beschreibbare Bohrung bei Ausführung als hohlzylindrisches Element sowie die Oberfläche der Walze, d.h. den Außenumfang des Bezuges selbst.

In einer vorteilhaften Weiterentwicklung wird ferner auch zwischen den einzelnen einander benachbart angeordneten Windungen eine stoffschlüssige Verbindung erzeugt. Der Stoffschluss kann dabei direkt, d.h. zwischen zumindest einzelnen Flächenbereichen an den zueinander weisenden Stirnseiten einander benachbart angeordneter Windungen erzeugt werden oder indirekt über die stoffschlüssige Verbindung der einzelnen Windungen mit dem Walzenkern. Diese Lösung bietet den Vorteil, dass auf speziell ausgebildete Mittel zur Lagefixierung in Längsrichtung der Walze, insbesondere im Bereich der stirnseitigen Enden des Walzenkerns vorzusehende Endringe oder Endstücke verzichtet werden kann.

Zur Lagefixierung bei Anordnung der einzelnen benachbarten Windungen in Längsrichtung der Walze betrachtet in radialer Richtung ist vorzugsweise ferner zumindest eine formschlüssige Verbindung zwischen den einander benachbarten Windungen vorgesehen. Der Formschluss wirkt in radialer Richtung und vorzugsweise einseitig in Längsrichtung der Walze betrachtet. Dadurch kann je nach Ausführung des Bezuges aus einem endlosen Profilband oder einer Mehrzahl von einzelnen Profilringen eine definierte Lagezuordnung der einander benachbarten Windungen in diesen Richtungen ermöglicht werden und damit im Endergebnis eine gleichmäßige Oberfläche am Außenumfang des Bezuges in Längsrichtung der Walze betrachtet bereitgestellt werden.

Die Erzeugung der einzelnen Windungen kann auf unterschiedliche Art und Weise erfolgen. Dabei wird zwischen Ausführungen mit Windungsbildung durch ein endloses Profilband und eine Ausführung mit Ausbildung einer einzelnen Windung von einem in Umfangsrichtung geschlossen ausgebildeten Profilring unterschieden. Die erste Möglichkeit bietet den Vorteil einer einfachen Herstellbarkeit durch Aufwickeln eines endlosen Profilbandes durch Relativbewegung der Oberfläche des Walzenkerns gegenüber dem das Profilband abgebenden Werkzeug. Dabei kann die Pressung zwischen dem Innenumfang des Profilbandes beim Umwickeln und dem Außenumfang des Walzenkerns durch die Betriebsweise der abgebenden Vorrichtung, insbesondere die Vorschubbewegung des Profilbandes sowie die Drehgeschwindigkeit des Walze in Umfangsrichtung, das heißt die Umfangsgeschwindigkeit der Oberfläche am Außenumfang des Walzenkerns gesteuert werden. In besonders vorteilhafter Ausführung werden die Zugkräfte derart ausgewählt, dass zwischen dem Profilband und der Oberfläche beziehungsweise dem Außenumfang des Walzenkerns lediglich eine Übergangs- oder Spielpassung vorherrscht. Dadurch wird der Verbund im Wesentlichen nur über den Stoffschluss realisiert, wobei hier für die stoffschlüssige Verbindung in Abhängigkeit der Wahl der stoffschlüssigen Verbindungsmittel unterschiedliche Eigenschaften erzielt werden können beziehungsweise die Eigenschaften an die tatsächliche Belastung am Bezug angepasst werden können.

In Analogie gilt dies auch für die zweite Ausführung der Erzeugung der einzelnen Windungen durch in Umfangsrichtung geschlossene Profilringe. Hier sind die Profilringe hinsichtlich ihres Innenumfanges an den Außenumfang des Walzenkerns angepasst und durch eine Übergangspassung oder eine Spielpassung gegenüber diesem charakterisiert.

Wird eine formschlüssige Verbindung durchgehend, d.h. frei von Unterbrechungen in Umlaufrichtung der Windungen verlaufend ausgeführt, können mit einem Profilband Walzenkerne mit den unterschiedlichsten Durchmessern in einfacher Art und Weise unter Erzeugung zumindest einer Übergangs- oder Spielpassung umwickelt werden. Bei Ausbildung der Windungen von Profilringen ist deren Lagezuordnung in Umfangsrichtung der Profilringe betrachtet frei wählbar. Durchlaufend ausgeführte formschlüssige Verbindungen vereinfachen damit die Herstellung des Bezuges.

Denkbar ist es jedoch auch, eine Mehrzahl von zueinander in Umlaufrichtung der einzelnen Windung beabstandet angeordneten formschlüssigen Verbindungen vorzusehen. In diesem Fall wechseln Stoßbereiche mit Formschlußbereichen ab.

Zur Fixierung der Lage in Längsrichtung der Walze betrachtet wird während des Aufziehens des Bezuges vorzugsweise eine Kraft gegen die bereits erstellten Windungen in Längsrichtung der Walze aufgebracht.

Bezüglich der konkreten Ausbildung des Stoffschlusses bestehen eine Vielzahl von Möglichkeiten. Grundsätzlich wird hier zwischen zwei Möglichkeiten unterschieden, die auch hinsichtlich der Verfahrensweise variieren können. Gemäß einer ersten vorteilhaften Ausführung ist es vorgesehen, den Stoffschluss zwischen den einzelnen benachbart angeordneten Windungen und/oder den einzelnen Windungen und der Oberfläche des Walzenkerns durch Verkleben, insbesondere das Aufbringen von Klebstoff auf die Fügeflächen der miteinander zu verbindenden Bauteile zu erzeugen, wobei das Aufbringen des Klebstoffes zeitlich vor dem Aufbringen der Windungen an der Walzenoberfläche auf die Oberfläche des Walzenkerns und/oder die entsprechenden Fügeflächen am Profilband erfolgt. Gemäß einer zweiten Ausführung kann auch ein Vergießen mit einer Vergussmasse erfolgen. Die zweite Grundausführung ist durch die Einbettung einer Grundanordnung von vorzugsweise formschlüssig miteinander verbundenen Windungen gegenüber dem Walzenkern in eine Vergussmasse charakterisiert. Als Vergussmasse kommen neben Klebstoff hauptsächlich Harze, insbesondere Epoxydharze zum Einsatz. Diese umfassen zumindest ein Polymer, welchem je nach gewünschter Reaktionsführung zumindest ein Härtemittel zugesetzt wird. In Abhängigkeit der Ausbildung der Zusammensetzung aus Epoxydharz und Härtemittel und der entsprechenden Prozess- beziehungsweise Zustandsparameter wie Temperatur erfolgt ein Aushärten des Verbundes. Im Einzelnen finden als Vergussmasse Mehrkomponentensysteme wie Epoxydharze, Polyesterharze oder Polyurethane Verwendung.

Der Walzenkern wird vorzugsweise von einem hohlzylindrischen Element gebildet. In einer besonders vorteilhaften Ausführung ist dieses aus einem faserverstärktem Kunststoff ausgebildet und erlaubt damit sehr gute Dämpfungseigenschaften gerade bei Walzenkernen geringen Durchmessers mit sehr großer Länge. Denkbar ist jedoch auch eine Ausführung aus einem metallischen Werkstoff.

In Analogie kann auch für den Walzenbezug entweder ein metallischer Werkstoff oder ein Kunststoff gewählt werden. Im letztgenannten Fall werden vorzugsweise Kunststoffe mit Faserverstärkung zum Einsatz gelangen, um hier insbesondere für die gewünschten Anwendungsfälle eine hohe Verschleiß- und Abriebfestigkeit der vom Bezug gebildeten Oberfläche zu realisieren, wobei die gebildete oder gebildeten Rillen zur Aufnahme und Speicherung von Fluid, insbesondere Entwässerungsfluid dienen. Als Kunststoff findet dabei Epoxy oder Polyester, als Faserverstärkung Glas-, Kohle- oder Aramidfasern oder Mischungen daraus Verwendung.

Bei erfindungsgemäß ausgeführten Walzen handelt es sich vorzugsweise um Presswalzen.

Die Ausführung der erfindungsgemäßen Walze ist in Anspruch 15 wiedergegeben. Die erfindungsgemäße Walze, insbesondere Papiermaschinenwalze, umfassend einen Walzenkern, ein um die Oberfläche des Walzenkerns aus zumindest einem zumindest eine Windung bildenden Element unter Ausbildung einer in Umfangsrichtung verlaufenden Rille gebildeten Bezug, ist **dadurch gekennzeichnet, dass** der Bezug stoffschlüssig mit dem Walzenkern verbunden ist.

Der Stoffschluss ermöglicht in Abhängigkeit der verwendeten Mittel eine sehr hohe Festigkeit und Belastbarkeit der Verbindung, wobei hier auf einfache Art und Weise die Eigenschaften der Verbindung durch die Zusammensetzung des zur Erzielung des Stoffschlusses verwendeten Mittels und der Prozessparameter steuerbar sind.

In einer vorteilhaften Weiterentwicklung werden bei Ausbildung des Bezuges aus einem endlosen Profilband das spiralförmige um den Außenumfang gelegte Band am Anfang und Ende der Walze, das heißt an beiden stirnseitigen Enden, mittels entsprechend gestalteten Endstücken fixiert.

In einer besonders vorteilhaften Ausführung ist es vorgesehen, dass das Profilband beziehungsweise der einzelne Profilring derart ausgeführt ist, dass die Rille durch das Aneinanderfügen auf Stoß von zwei einander benachbarten Windungen beziehungsweise Profilringen erzeugt wird. Dazu weist beispielhaft das Profilband an seinem den Außenumfang des Walzenbezuges bildenden Bereich geringere Abmessungen beziehungsweise sich in Richtung der Fügefläche mit dem Walzenkern weisende Ausnehmungen auf, die bei Anordnung auf Stoß mit der benachbarten Windung die Rillen bilden. Bei diesen Ausnehmungen handelt es sich dabei bezogen auf die Stirnseite des profilbildenden Elementes um randoffene Ausnehmungen.

Die Stirnseiten der jeweils in Längsrichtung der Walze benachbarten Windungen sind durch Formschlusselemente charakterisiert, wobei an einem Profilring beziehungsweise am Profilband die Formschlusselemente an den voneinander weg weisenden Stirnseiten jeweils komplementär ausgeführt sind, so dass hier ein einfaches Ineinandergreifen und die Erstellung einer formschlüssigen Verbindung, beispielsweise Klickverbindung, möglich ist. Dadurch wird für den Gesamtverbund eine sehr hohe Festigkeit erzielt, insbesondere auch in radialer Richtung.

Die erfindungsgemäße Lösung ist nicht auf die dargestellte Ausführung beschränkt. Dabei kann bei einem Verfahren zur Herstellung in zeitlicher Abfolge nach der Bereitstellung ein Auftragen von Adhäsionsmitteln an die miteinander zu fügenden Elemente und erst im Anschluss daran eine Zuordnung dieser zueinander erfolgen, während bei einem Vergießen immer die Anordnung beziehungsweise Lagezuordnung der einzelnen miteinander zu fügenden Komponenten zueinander vorrangig ist, während das Vergießen im Anschluss erfolgt. Zur Erleichterung des Vergießens ist es vorgesehen, im Profilband oder im profilierten Ring zusätzliche Öffnungen beziehungsweise Bohrungen einzubringen, die ein entsprechendes Verlaufen der Vergussmasse ermöglichen.

Die erfindungsgemäße Lösung ist nicht auf die beschriebenen Ausführungen beschränkt. Es sind jegliche Ausführungen eines Stoffschlusses denkbar.

Die erfindungsgemäße Lösung wird nachfolgend anhand von Figuren erläutert. Darin ist im Einzelnen folgendes dargestellt:
Fig. 1a verdeutlicht anhand eines Ausschnittes aus einem Axialschnitt den Aufbau einer erfindungsgemäß ausgeführten Walze;
Fig. 1b verdeutlicht anhand eines Ausschnittes einer Abwicklung des den Bezug bildenden Profilbandes die Ausbildung des Profils;
Fig. 2 verdeutlicht in einem Axialschnitt die Ausführung eines Profilringes;
Fig. 3a-3b verdeutlichen anhand von Signalflussbildern den grundlegenden Ablauf eines erfindungsgemäßen Verfahrens.

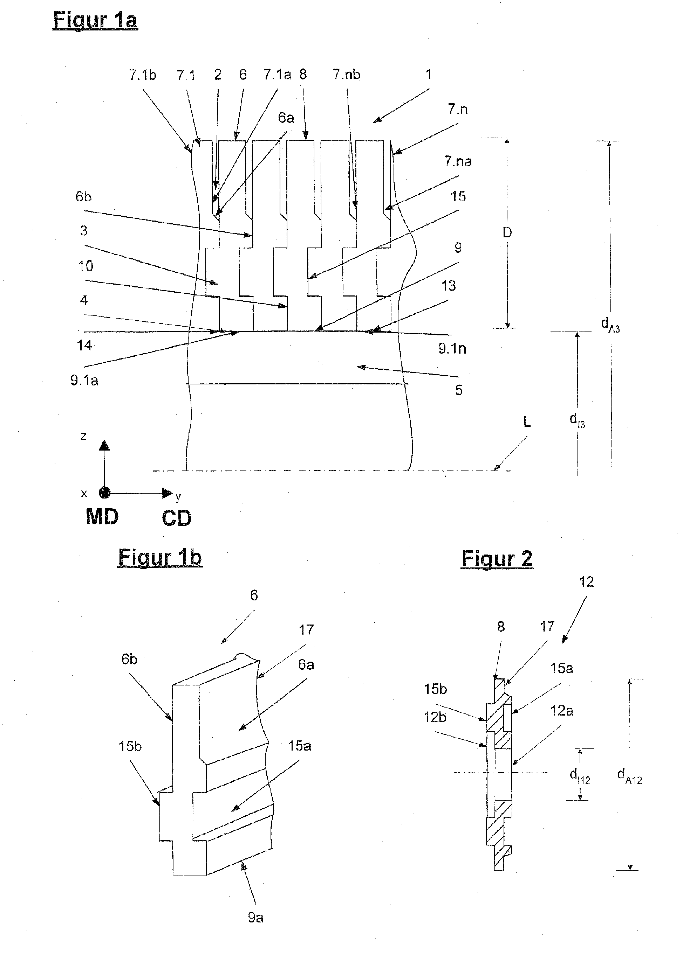

Die Figur 1a verdeutlicht in schematisiert vereinfachter Darstellung anhand eines Ausschnittes aus einem Axialschnitt eine erfindungsgemäß ausgebildete Walze 1, insbesondere Papiermaschinenwalze, wie sie beispielsweise in Pressenpartien von Maschinen zur Herstellung von Materialbahnen, insbesondere Faserstoffbahnen in Form von Papier-, Karton- oder Tissuebahnen zum Einsatz gelangen kann. Zur Verdeutlichung der einzelnen Richtungen ist an die Walze 1 ein Koordinatensystem angelegt, welches sich auf die Positionierung der Walze 1 in Einbaulage in einer Maschine zur Herstellung derartiger Faserstoffbahnen bezieht. Die X-Richtung beschreibt dabei die Transportrichtung der Faserstoffbahn und wird auch als Maschinenrichtung MD bezeichnet. Die Y-Richtung entspricht der Breitenrichtung und damit Erstreckung der Walze 1 parallel zur Längsachse L, während die Z-Richtung die Höhenrichtung wiedergibt. Der in der Figur 1a dargestellte Ausschnitt aus dem Axialschnitt durch die Walze 1 ist in der YZ-Ebene wiedergegeben.

Die Walze 1 umfasst einen Rillen 2 aufweisenden Bezug 3, welcher auf unterschiedliche Art und Weise erzeugt werden kann. Dieser ist auf einen Walzenkern 5 aufgebracht. Der Bezug 3 umschließt den Außenumfang 4 des Walzenkerns 5, insbesondere die von der Mantelfläche 13 gebildete Oberfläche. Erfindungsgemäß erfolgt die Verbindung zwischen Bezug 3 und Walzenkern 5 im Wesentlichen nur durch eine stoffschlüssige Verbindung 9.

Die Walze 1 gemäß Figur 1a verdeutlicht eine besonders vorteilhafte Ausführung des Bezuges 3, welche durch Aufwickeln eines Profilbandes 6 um die Oberfläche 4 des Walzenkerns 5 durch Erzeugung einer Vielzahl von nebeneinander angeordneten Windungen 7.1 bis 7.n hergestellt ist. Das Profilband 6 fungiert als das, die Windungen 7.1 bis 7.n bildende Element. Der Bezug 3 ist dabei durch einen Innendurchmesser d_{I3} und einen Außendurchmesser d_{A3} charakterisiert, wobei der Abstand zwischen beiden die Dicke D beziehungsweise in radialer Richtung betrachtet die Höhe des Bezuges 3 beschreibt. Die einzelnen Windungen 7.1 bis 7.n sind auf Stoß zueinander in Längsrichtung der Walze 1 unter Erzeugung der zumindest einen Rille 2 angeordnet.

Unter dem Walzenkern 5 im Sinne der Erfindung wird ein einzelnes Bauteil oder eine Baugruppe mit einer Außenfläche verstanden, welche von einem zylindrischen oder hohlzylindrischen, insbesondere rohrförmigen Körper gebildet wird. Dieser besteht vorzugsweise aus faserverstärkten Werkstoffen, insbesondere einem Faser-Kunststoff-Verbund, umfassend Fasern und eine Kunststoffmatrix. Ferner kann der zylindrische oder hohlzylindrische Körper aus einem metallischen Werkstoff, insbesondere einem Stahlprofil gebildet werden. Im dargestellten Fall ist der Walzenkern 5 als hohlzylindrisches Element ausgeführt, insbesondere rohrförmiges Element 11.

Das den Bezug 3 bildende Profilband 6 ist derart ausgebildet, dass dieses geeignet ist, beim Umwickeln des Außenumfanges 4 des Walzenkerns 5 unter Ausbildung der Windungen 7.1 bis 7.n jeweils zwischen zwei einander benachbarten Windungen 7.1 und 7.2 beziehungsweise 7.n und 7.n+1 mit n≥1, vorzugsweise zwischen jeweils allen einander benachbarten Windungen in Umfangsrichtung fortlaufend oder in Umfangsrichtung beabstandet zueinander zumindest eine formschlüssige Verbindung 15 zu erzeugen und ferner eine am Außenumfang 8 des Bezuges 3 in Umfangsrichtung schraubenlinienförmig verlaufende Rille 2. Bezüglich der konkreten Ausführung der Profilierung des Profilbandes 6 bestehen dazu eine Vielzahl von Möglichkeiten. Das Profilband 6 weist zwei Stirnseiten 6a und 6b auf, welche beim Umwickeln die Stirnseiten 7.1a, 7.1b bis 7.na, 7.nb der Windungen 7.1 bis 7.n bilden. Die später den Innenumfang 14 des Bezuges 3 und die Fügeflächen 9.1a bis 9.na der Windungen 7.1 bis 7.n bildenden Flächen sind vorzugsweise derart ausgeführt, dass diese am Außenumfang 4 des Walzenkerns 5 flächig anliegen können.

Vorzugsweise wird die am Außenumfang 8 des Bezuges 3 ausgebildete Rille 2 jeweils direkt zwischen zwei einander benachbarten Windungen 7.n bis 7.n+1 erzeugt. Der den Außenumfang 8 des Bezuges 3 bildende Endbereich des Profilbandes 6 ist dazu derart ausgeführt, dass dieser in Funktionslage einen sich von der den Außenumfang 8 des Bezuges 3 bildenden Fläche in radialer Richtung zur Längsachse L der Walze 1 erstreckenden Bereich aufweist, welcher nicht als Stoßfläche zur benachbarten Windung fungiert und somit der Ausbildung eines sich vom Außenumfang 8 des Bezuges 3 in radialer Richtung zur Längsachse L der Walze 1 erstreckenden und die Rille 2 beschreibenden Freiraumes zwischen den beiden einander benachbart angeordneten Windungen dient.

Die formschlüssige Verbindung 15 zwischen zwei einander benachbart angeordneten Windungen 7.n und 7.n+1 wird an den jeweils zueinander weisenden Stirnseiten 7.na und 7.n+1b der Windungen erzeugt. Erfolgt vorzugsweise die Ausbildung der formschlüssigen Verbindung 15 durchgängig, d.h. fortlaufend über den Verlauf der einzelnen Windungen 7.1 bis 7.n in Umlaufrichtung, ist das Profilband 6 an seinen voneinander wegweisenden Stirnseiten 6a und 6b jeweils mit einer komplementären und in Längsrichtung des Profilbandes 6 im abgewickelten Zustand betrachtet verlaufenden Profilierung ausgebildet. Die einzelne Profilierung ist bezogen auf die Funktionslage in Längsrichtung der Walze 1 ausgerichtet. Die Profilierungen erlauben beim Ineinandergreifen eine Fixierung der Windungen 7.1 bis 7.n in ihrer Lage zueinander, insbesondere in radialer Richtung und in einer Richtung in Längsrichtung der Walze 1. Im einfachsten Fall werden dazu an den voneinander wegweisenden Stirnseiten 6a, 6b des Profilbandes 6 zueinander komplementär ausgeführte Ausnehmungen 15a und Vorsprünge 15b ausgebildet, d.h. die Ausnehmung 15a ist das Negativ von Vorsprung 15b. Die Figur 1b verdeutlicht beispielhaft eine mögliche Ausführung eines Profilquerschnittes des Profilbandes 6 aus Figur 1a anhand einer Darstellung im abgewickelten Zustand. Erkennbar sind die an den voneinander wegweisenden Stirnseiten 6a, 6b angeordneten Ausnehmungen 15a und Vorsprünge 15b. Die Ausnehmung 15a wird dabei von zwei in Höhenrichtung zueinander beabstandet angeordneten und bezogen auf die Funktionslage im eingebauten Zustand des Bezuges 3 in Längsrichtung der Walze 1 weisenden Erhöhungen gebildet. Ferner weist zumindest eine, hier die, die Ausnehmung 15a aufweisende Stirnseite 6a einen Bereich auf, der der Ausbildung der Rille 2 dient. Dazu ist die in Einbaulage radial äußere, die Ausnehmung 15a begrenzende Erhöhung beabstandet von der den Außenumfang 8 des Bezuges 3 bildenden Fläche angeordnet, d.h. diese Erhöhung verläuft nicht bis zur den Außenumfang 8 des Bezuges 3 bildenden Fläche des Profilbandes 6. Dadurch werden, bezogen auf die in Längsrichtung erfolgende Aneinanderreihung der einzelnen Windungen 7.1 bis 7.n, am dadurch gebildeten Bezug 3 am Außenumfang 8 randoffene, die Rille 2 bildende Ausnehmungen gebildet. Die Steigung der Rille kann dabei beliebig gewählt werden. Die Geometrie des Querschnittes der Rille 2 im Axialschnitt durch diese kann dabei als Funktion der Geometrie des Profilquerschnittes des Profilbandes 6 an dem den Außenumfang 8 des Bezuges 3 bildenden Bereich beschrieben werden.

Erfindungsgemäß ist zumindest zwischen dem Walzenkern 5 und dem Profilband 6, insbesondere den einzelnen Windungen 7.1 bis 7.n und vorzugsweise zusätzlich den einzelnen Windungen 7.1 bis 7.n untereinander, ein Stoffschluss vorgesehen. Die stoffschlüssige Verbindung zwischen dem Walzenkern 5 und dem Bezug 3, insbesondere dem aufgewickelten Profilband 6, hier jeweils den einzelnen Windungen 7.1 bis 7.n, ist mit 9 bezeichnet, während die stoffschlüssige Verbindung zwischen den einzelnen Windungen 7.1 bis 7.n untereinander mit 10 bezeichnet ist. Der Stoffschluss kann dabei durch Kleben oder mittels zumindest einer Vergussmasse erfolgen. Das Kleben erfolgt dabei unter Verwendung zumindest eines Klebstoffes, welcher auf eine oder beide der miteinander zu fügenden Flächen von Walzenkern 5 und Windungen 7.1 bis 7.n, d.h. Profilband 6 aufgetragen wird. Die Fügefläche am Walzenkern 5 wird dabei von der Oberfläche am Außenumfang 5 beschrieben. Die Fügeflächen an den Windungen 7.1 bis 7.n sind mit 9.1a bis 9.na bezeichnet. Bei dem Klebstoff handelt es sich nach DIN EN 923 um einen nichtmetallischen Werkstoff, der miteinander zu fügende Fügeteile durch Kohäsion und Adhäsion miteinander verbinden kann. Die Auswahl erfolgt entsprechend der Anforderungen an die Festigkeit der Verbindung und die Fügezeit.

Der Stoffschluss mittels Vergussmasse erfolgt durch Vergießen dieser und Aushärtung. Als Vergussmassen finden vorzugsweise Gießharze Verwendung. Bei diesen handelt es sich um durch Polymerisations-, Polyadditions- oder Polykondensation synthetisch hergestellte Harze. Diese umfassen als Hauptkomponenten das Harz und zumindest ein Härtemittel, wobei über die chemischen und physikalischen Eigenschaften des Härtemittels und der Prozessparameter der Fügeprozess beeinflusst werden kann. Als Vergussmassen, welche vorzugsweise flüssig vorliegen, finden vorzugsweise Mehrkomponentensysteme, insbesondere Epoxydharze, Polyesterharze und Polyurethane Anwendung.

Die Festigkeit der Verbindung kann dabei als Funktion der Eigenschaften der Vergussmasse und/oder Prozessparameter beim Vergießen und Aushärten beeinflusst werden.

Das Umwickeln des Walzenkerns mit Profilband 6 erfolgt vorzugsweise derart, dass die Verbindung im Wesentlichen durch den Stoffschluss und nicht durch die Erzeugung von Haftspannungen zwischen den Windungen 7.1 bis 7.n und dem Walzenkern 5 bedingt ist. Dazu ist zwischen dem durch das Umwickeln gebildeten Bezugskörper und dem Außenumfang 4 des Walzenkerns 5 zumindest eine Übergangspassung, vorzugsweise Spielpassung vorgesehen. Das Umwickeln erfolgt mittels gängiger Techniken mit einer solchen Zugspannung, die zu einer radialen Veränderung des Grundkörpers von weniger als 1 mm, bevorzugt von weniger als 0,5 mm führen. Dies kann beispielsweise durch ein vorgeformtes Profilband 6 realisiert werden, dessen Innendurchmesser um ein gewisses Maß kleiner als ein Außendurchmesser des Walzenkerns 5 ist.

Wird der Walzenkern 5 von einem hohlzylindrischen Element 11, insbesondere einem Walzenrohr 11 gebildet, bietet diese Lösung den Vorteil, dass die stoffschlüssigen Verbindungen 9 und 10, welche durch Kleben oder Einbettung in Vergussmassen erzeugt werden können, nach Abziehen des fertigen gebildeten aus hohlzylindrischem Element 11 und Bezug 3 bestehenden Walzenmantels vom Herstellungsdorn keine Nachbearbeitung mehr notwendig ist. Wird in besonders vorteilhafter Ausführung der Walzenkern 5 aus faserverstärktem Kunststoff ausgebildet, können die Dämpfungseigenschaften voll genutzt werden. Die vergleichsweise geringe Masse reduziert dabei die Barring-Gefahr.

Gemäß einer weiteren zweiten Ausführung kann der Bezug 3 auch aus einer Mehrzahl von geschlossenen Profilringen 12.1 bis 12.n erzeugt werden, die nacheinander auf den Außenumfang des Walzenkerns 5 aufgeschoben werden. Die einzelnen Profilringe 12.1 bis 12.n werden auf Stoß angeordnet. Diese bilden jeweils eine Windung 7.1 bis 7.n des Bezuges 3. Die einzelnen Profilringe 12.1 bis 12.n sind dabei durch einen Innendurchmesser d_{I12} charakterisiert, der im Wesentlichen dem Außendurchmesser d_{A5} des Walzenkerns entspricht, wobei hier zumindest eine Übergangspassung oder Spielpassung gewählt wird, um ein Aufschieben der Profilringe 12.1 bis 12.n auf den Walzenkern 5 zu ermöglichen. Der Verbund zwischen diesen und dem Walzenkern 5 erfolgt ebenfalls über Stoffschluss, hier die stoffschlüssige Verbindung 9, wobei zusätzlich zwischen den einzelnen Profilringen, insbesondere jeweils an den zueinander weisenden Stirnseiten in axialer Richtung ein Formschluss erzeugt werden kann, ferner zwischen diesen zusätzlich eine stoffschlüssige Verbindung 10. Auch hier können die stoffschlüssigen Verbindungen 9 und/oder 10 als Klebverbindungen oder Verbindungen durch Vergussmassen ausgeführt werden. Bezüglich der Ausbildung des Formschlusses wird auf die Ausführungen zu Figur 1a, 1b verwiesen.

Die Figur 2 verdeutlicht beispielhaft einen Profilring 12 im Axialschnitt. Dieser ist durch einen Innendurchmesser d_{I12} charakterisiert, welcher an den Außendurchmesser des Walzenkerns 5 angepasst ist und einen Außendurchmesser d_{A12}, welcher dem Außendurchmesser des Bezuges 3 entspricht. An den Stirnseiten 12a und 12b sind zur Erzeugung eines Formschlusses mit benachbart auf Stoß anordenbaren Profilringen Formschlusselemente in Form von Profilierungen vorgesehen, welche vorzugsweise von zueinander komplementär ausgeführten Vorsprüngen 15b und Ausnehmungen 15a gebildet werden. Auch hier stellt die Ausnehmung 15a das Negativ zum Vorsprung 15b dar. Der in radialer Richtung äußere Endbereich 16 ist derart ausgeführt, dass bei Anordnung mit einer benachbarten Windung auf Stoß die Rille 2 gebildet wird.

Bei allen dargestellten Ausführungen ist die Profilierung zur Erzeugung der formschlüssigen Verbindungen 15 sowie der Rille 2 hinsichtlich Geometrie und/oder Dimensionierung an die konkreten Anforderungen des Einsatzfalles anpassbar. Zusätzlich können die die Windungen 7.1 bis 7.n bildenden Elemente Bohrungen oder Ausnehmungen zur Führung und Verteilung von Klebstoff und/oder Vergussmasse enthalten.

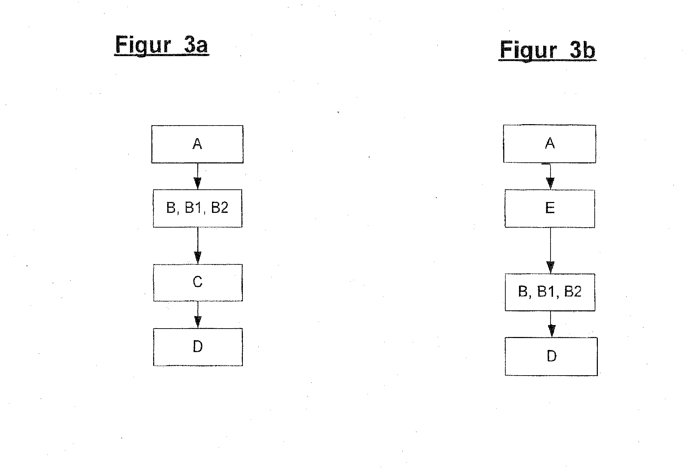

Je nach Ausbildung der stoffschlüssigen Verbindungen 9 und/oder 10 als Klebverbindung oder durch Vergießen mittels Vergussmasse kann das erfindungsgemäße Verfahren entsprechend der in den Figuren 3a und 3b anhand von Signalflußbildern dargestellten Grundabfolge ausgeführt werden. Figur 3a verdeutlicht dabei beispielhaft eine Ausführung mit Einbettung in Harz. Dabei wird in einem ersten Verfahrensschritt A der Walzenkern 5 bereitgestellt. Der zweite Verfahrensschritt B ist dadurch charakterisiert, dass die, die Rillen 2 bildenden Elemente, insbesondere das Profilband 6 oder die einzelnen Profilringe 12.1 bis 12.n, um den Außenumfang 4 des Walzenkerns 5 unter Ausbildung der auf Stoß angeordneten Windungen 7.1 bis 7.n positioniert werden, in einem ersten Fall B1 das Profilband 6 um diesen aufgewickelt und im zweiten Fall B2 Profilringe 12.1 bis 12.n unter Ausbildung der formschlüssigen Verbindungen 15 zwischen den einander benachbart angeordneten Windungen aufgeschoben werden. Im Anschluss daran erfolgt in C ein Vergießen mittels Vergussmasse, wobei diese zwischen den von den Windungen 7.1 bis 7.n gebildeten Fügeflächen 9.1a bis 9.na und den vom Außenumfang 4 des Walzenkerns 5 gebildeten Fügeflächen 9b eingebracht wird, ferner zwischen die einzelnen Windungen 7.1 bis 7.n. Dazu sind im Profilband 6 oder dem einzelnen Profilring 12.1 bis 12.n sich beispielsweise vom Außenumfang in Richtung zu den Fügeflächen 9.1a bis 9.na erstreckende Nuten oder Kanäle vorgesehen, durch welche einerseits die Vergussmasse eindringen und andererseits Luft entweichen kann. In Analogie kann hier auch ein Ausgießen mit Klebstoff erfolgen. Die Wahl der Vergussmasse und die Prozessparameter bestimmen dabei die Eigenschaften und Ausbildung der Verbindung. Der Verfahrensschritt D beschreibt das Aushärten unter Vorliegen des Endproduktes.

Gemäß Figur 3b ist es in E vorgesehen, beim Verkleben der Windungen 7.1 bis 7.n, insbesondere des Profilbandes 6 oder der Profilringe 12.1 bis 12.n mit dem Walzenkern 5 die an diesen ausgebildeten Fügeflächen 9.1a bis 9.na für die Windungen 7.1 bis 7.n, 9b für den Walzenkern 5 und gegebenenfalls die Stirnseiten 7.1a bis 7.1 n, 7.1b bis 7.nb mit einem Adhäsionsmittel, insbesondere Klebstoff zu versehen und im Anschluss daran die Windungen 7.1 bis 7.n in B beziehungsweise B1, B2 zu positionieren. Dabei kann das Adhäsionsmittel auf die Fügeflächen nur eines der den Stoffschluss miteinander eingehenden Elemente aufgebracht werden oder aber vorzugsweise auch auf beide. Die Wahl des Adhäsionsmittels erfolgt in Abhängigkeit oder als Funktion der erforderlichen Verbindungskräfte.

In allen Fällen kann das das Profil bildende Element zur Herstellung des Verbundes in Axialrichtung sowie zur Erzeugung der Rillen 2 aus Kunststoff, insbesondere faserverstärktem Kunststoff oder Metall bestehen. Die Haftung des Profils am Walzenkern wird dabei durch die stoffschlüssige Verbindung, insbesondere den Harzverbund oder die Klebung, dominiert und nicht oder nur im geringen Maße durch die Spannung beim Aufbringen.

Die Profilierung des Profilbandes 6 beziehungsweise des Profilringes 12.1 bis 12.n kann verschiedenartig ausgeführt sein. Diese kann beispielhaft eine hier nicht dargestellte mehrgängige Rille aufweisen, wobei an der Stoßstelle die Rillenbreite dann im Wesentlichen gleich sein sollte wie im mehrgängigen Bereich.

Die Fixierung an den stirnseitigen Endbereichen des Walzenkerns 5 erfolgt durch speziell gestaltete Endstücke. Dabei kann die Fixierung kraft- oder formschlüssig erfolgen.

Das Spezialprofil kann gebogen mit dem Durchmesser des Walzenkerns hergestellt werden. Dieses kann mit sehr widerstandsfähigem Material verstärkt sein, um eine hohe Abriebfestigkeit zu erreichen. Auch das Harzsystem soll sich dabei durch gute Verschleißeigenschaften auszeichnen. Wird zusätzlich ein Verbund zwischen den einzelnen Windungen 7.1 bis 7.n in axialer Richtung erzeugt, kann auf speziell gestaltete Endstücke am Walzenkern 5 verzichtet werden.

Die erfindungsgemäße Lösung ist nicht auf die dargestellte Ausführung beschränkt. Entscheidend ist, dass zwischen dem Bezug 3 und dem Walzenkern 5 ein Stoffschluss vorhanden ist und die Verbindung zwischen diesen im Wesentlichen durch den Stoffschluss erzeugt wird.

### Bezugszeichenliste

- 1: Walze
- 2: Rille
- 3: Bezug
- 4: Außenumfang
- 5: Walzenkern
- 6: Profilband
- 6a, 6b: Stirnseite
- 7.1-7.n: Windung
- 7.1a, 7.n+1: Stirnseite der einzelnen Windung
- 8: Außenumfang des Bezuges 3
- 9: stoffschlüssige Verbindung
- 9,9.1a-9.na,9.1b-9.nb: Fügeflächen
- 10: stoffschlüssige Verbindung
- 11: hohlzylindrisches Element
- 12: Profilring
- 12a, 12b: Stirnseite
- 13: Mantelfläche
- 14: Innenumfang Bezug
- 15: formschlüssige Verbindung
- 15a: Ausnehmung
- 15b: Vorsprung
- 16: Endbereich
- d_{I3}: Innendurchmesser Bezug
- d_{A3}: Außendurchmesser Bezug
- d_{I12}: Innendurchmesser Profilring
- d_{A12}: Außendurchmesser Profilring
- A, B, B1, B2, C, D, E: Verfahrensschritte

## Patentansprüche

1. Verfahren zur Herstellung einer Walze (1), insbesondere Papiermaschinenwalze mit gerillter Oberfläche durch Aufbringen eines gerillten Bezuges (3) auf einen Walzenkern (5), bei welchem die zumindest einzelne Rille (2) von einander benachbart auf Stoß angeordneten Windungen (7.1-7.n) zumindest eines, Windungen (7.1-7.n) bildenden Elementes gebildet werden,
**dadurch gekennzeichnet,**
**dass** die einzelnen Windungen (7.1-7.n) um den Außenumfang (4) des Walzenkerns (5) angeordnet werden und zumindest zwischen den einzelnen Windungen (7.1-7.n) und dem Walzenkern (5) eine stoffschlüssige Verbindung (9) erzeugt wird.

2. Verfahren nach Anspruch 1,
**dadurch gekennzeichnet,**
**dass** zwischen den einzelnen in Längsrichtung der Walze (1) betrachtet einander benachbart auf Stoß angeordneten Windungen (7.1-7.n) eine stoffschlüssige Verbindung (10) erzeugt wird.

3. Verfahren nach Anspruch 1 oder 2,
**dadurch gekennzeichnet,**
**dass** zwischen den einzelnen in Längsrichtung der Walze (1) betrachtet zueinander benachbart angeordneten Windungen (7.1-7.n) eine formschlüssige Verbindung (10) erzeugt wird.

4. Verfahren nach einem der Ansprüche 1 bis 3,
**dadurch gekennzeichnet,**
**dass** als Windungen (7.1-7.n) bildendes Element ein Profilband (6) verwendet wird und die einzelnen Windungen (7.1-7.n) durch Aufwickeln des Profilbandes (6) auf Stoß um den Außenumfang (4) des Walzenkernes (5) erzeugt werden, wobei das Profilband (6) derart ausgeführt ist, dass dieses geeignet ist, dass zwischen den einander benachbart auf Stoß angeordneten Windungen (7.1-7.n) eine schraubenlinienförmig verlaufende Rille (2) am Außenumfang (8) des Bezuges (3) erzeugt wird.

5. Verfahren nach Anspruch 4,
**dadurch gekennzeichnet,**
**dass** das Aufwickeln des Profilbandes (6) auf den Walzenkern (5) unter einer Zugspannung erfolgt, welche so gewählt ist, dass eine radiale Verformung des Walzenkerns von weniger als 1 mm, bevorzugt von weniger als 0,5mm erfolgt beziehungsweise das Profilband (6) derart aufgewickelt wird, dass zwischen den zum Außenumfang (4) des Walzenkerns (5) weisenden Fügeflächen (9.1a-9.1n) der Windungen (7.1-7.n) und dem Außenumfang (4) des Walzenkerns (5) zumindest eine Übergangspassung oder Spielpassung besteht.

6. Verfahren nach Anspruch 5,
**dadurch gekennzeichnet,**
**dass** ein vorgeformtes Profilband (6) so ausgelegt ist, dass ein Innendurchmesser des Profilbandes (6) um ein geeignetes Maß kleiner ist als ein Außendurchmesser des Walzenkerns (5), wobei das Maß ca. 0,5mm beträgt.

7. Verfahren nach einem der Ansprüche 1 bis 3,
**dadurch gekennzeichnet,**
**dass** die einzelnen Windungen (7.1-7.n) von einzelnen in Umfangsrichtung geschlossen ausgeführten Profilringen (12) erzeugt werden, wobei die einzelnen Profilringe (12) in axialer Richtung auf den Walzenkern (5) aufgeschoben werden.

8. Verfahren nach einem der Ansprüche 1 bis 6,
**dadurch gekennzeichnet,**
**dass** die einzelne stoffschlüssige Verbindung (9, 10) durch Verkleben erzeugt wird.

9. Verfahren nach Anspruch 7,
**dadurch gekennzeichnet,**
**dass** das Aufbringen des Klebstoffes dem Aufbringen der Windungen (7.1-7.n) am Außenumfang (4) des Walzenkerns (5) zeitlich vorgeordnet erfolgt.

10. Verfahren nach einem der Ansprüche 1 bis 6,
**dadurch gekennzeichnet,**
**dass** der Stoffschluss durch Vergießen mit einer Vergussmasse, insbesondere einem Mehrkomponentensystem, vorzugsweise einem Epoxidharz, einem Polyesterharz oder einem Polyurethan erfolgt.

11. Verfahren nach Anspruch 9,
**dadurch gekennzeichnet,**
**dass** das Epoxydharz aus zumindest einem Polymer, insbesondere Polyether, und einem Härter zusammengesetzt ist.

12. Verfahren nach einem der Ansprüche 7 bis 10,
**dadurch gekennzeichnet,**
**dass** die Eigenschaften der einzelnen stoffschlüssigen Verbindung (9, 10) als Funktion
- des verwendeten Klebstoffes oder der Vergussmasse
- des Materials und/oder der Oberflächenbeschaffenheit der Fügeflächen (9.1a-9.na, 9b) der Windungen (7.1-7.n) und des Walzenkerns (5) eingestellt werden.

13. Verfahren nach einem der Ansprüche 1 bis 11,
**dadurch gekennzeichnet,**
**dass** der Walzenkern (5) als hohlzylindrisches Element (11) ausgeführt wird.

14. Verfahren nach einem der Ansprüche 1 bis 11,
**dadurch gekennzeichnet,**
**dass** der Walzenkern (5) aus einem faserverstärkten Kunststoff oder aus einem Metall ausgebildet wird.

15. Verfahren nach einem der Ansprüche 1 bis 12,
**dadurch gekennzeichnet,**
**dass** die einzelnen Windungen (7.1-7.n) bildenden Elemente aus einem Kunststoff, insbesondere faserverstärktem Kunststoff ausgeführt werden.

16. Walze (1), insbesondere Papiermaschinenwalze, umfassend einen Walzenkern (5), ein um die Oberfläche des Walzenkerns (5) aus zumindest einem zumindest eine Windung (7.1-7.n) bildenden Element unter Ausbildung zumindest einer in Umfangsrichtung verlaufenden Rille (2) gebildeten Bezug (3),
**dadurch gekennzeichnet,**
**dass** der Bezug (3) stoffschlüssig mit dem Walzenkern (5) verbunden ist.

17. Walze (1) nach Anspruch 15,
**dadurch gekennzeichnet,**
**dass** die einzelnen Windungen (7.1-7.n) in Längsrichtung der Walze (1) betrachtet stoffschlüssig miteinander verbunden sind.

18. Walze (1) nach Anspruch 15 oder 16,
**dadurch gekennzeichnet,**
**dass** zwischen den zueinander weisenden Stirnseiten (7.1a-7.na, 7.1b-7.nb) zweier benachbarter Windungen (7.1-7.n) eine formschlüssige Verbindung (15) ausgebildet ist.

19. Walze (1) nach Anspruch 17,
**dadurch gekennzeichnet,**
**dass** die formschlüssige Verbindung (15) durch zueinander komplementär ausgebildete, in Längsrichtung der Walze (1) ausgerichtete Vorsprünge (15b) und/oder Ausnehmungen (15a) ausgebildet wird.

20. Walze (1) nach einem der Ansprüche 15 bis 18,
**dadurch gekennzeichnet,**
**dass** der Walzenkern (5) von einem hohlzylindrischen Element (11), insbesondere Rohr gebildet wird.

21. Walze (1) nach einem der Ansprüche 15 bis 19,
**dadurch gekennzeichnet,**
**dass** der Walzenkern (5) aus einem faserverstärkten Kunststoff oder aus einem Metall ausgebildet ist.

22. Walze (1) nach einem der Ansprüche 15 bis 20,
**dadurch gekennzeichnet,**
**dass** der Bezug (3) aus Kunststoff mit oder ohne Faserverstärkung ausgebildet ist.

23. Walze (1) nach einem der Ansprüche 15 bis 20,
**dadurch gekennzeichnet,**
**dass** der Bezug (3) aus einem metallischen Werkstoff ausgebildet ist.

24. Walze (1) nach einem der Ansprüche 15 bis 22,
**dadurch gekennzeichnet,**
**dass** die Profilierung des einzelnen, die einzelnen Windungen (7.1-7.n) bildenden Elementes
als Funktion
- der zu erzeugenden Rille (2)
- der formschlüssigen Verbindung (15) zwischen einander benachbart
angeordneten Windungen (7.1-7.n)
ausgeführt ist.

25. Walze (1) nach einem der Ansprüche 15 bis 23,
**dadurch gekennzeichnet,**
**dass** die in Umfangsrichtung verlaufende Rille (2) mehrgängig ausgebildet ist.

26. Walze (1) nach einem der Ansprüche 15 bis 24,
**dadurch gekennzeichnet,**
**dass** diese als Presswalze ausgebildet ist.

27. Walze (1), hergestellt nach einem Verfahren gemäß einem der Ansprüche 1 bis 14.
